# EUROPEAN PATENT APPLICATION

(11) **EP 2 381 681 A1**
(43) Date of publication of application: **26.10.2011**
(21) Application number: 08879075.3
(22) Date of filing: 25.12.2008
(51) Int. Cl.: H04N 7/14

(54) **METHOD FOR RECEIVING AND DELIVERING ELECTRONIC SERVICE GUIDE (ESG) AND RECEIVING DEVICE FOR RECEIVING ESG**

(71) Applicant: ZTE Corporation, Shenzhen, Guangdong 518057 (CN)
(72) Inventor: XIAO, Longan, Shenzhen Guangdong 518057 (CN); WU, Qingliang, Shenzhen Guangdong 518057 (CN)
(74) Representative: Bokinge, Ole
(86) International application number: PCT/CN2008/073733
(87) International publication number: WO 2010/072033

(57) **Abstract**

A method for receiving and delivering the Electronic Service Guide (ESG) and a device for receiving the ESG are disclosed. The method comprises: a multimedia broadcast system dividing the ESG into the basic ESG information and the enhanced ESG information, and delivering the basic ESG information via a broadcast network and the enhanced ESG information via an interactive network; wherein the basic ESG information comprises at least the basic description information, data information and programs prompt information, and the enhanced ESG information comprises at least the service provisioning information and/or the interactive information; after accessing the mobile multimedia service application, a mobile terminal receiving the basic ESG information via the broadcast network and the enhanced ESG information via the interactive network, then combining the basic ESG information and the enhanced ESG information into the complete ESG information which will be displayed to users. The present invention provides a service guide with strong interaction property to the users.

## Description

### Technical Field

The present invention relates to the technology for delivering and receiving the mobile multimedia broadcast service information, and more especially, to a method for receiving and delivering electronic service guide (ESG) and the receiving device thereof.

### Background of the Related Art

The mobile multimedia broadcast service (also called the mobile television) can be implemented through a plurality of techniques, which can be classified into the following two kinds according to the networks used:
(1) Implement the mobile multimedia services via the mobile communication network;
   Such as the multimedia broadcast multicast service (MBMS), broadcast and multicast service (BCMCS) and stream multimedia technologies based on the mobile communication network etc.
(2) Implement the mobile multimedia service via the broadcast network (terrestrial digital broadcast and satellite digital broadcast);
   Such as the digital video broadcast handheld (DVB-H) in Europe and China mobile multimedia broadcast (CMMB) etc.

The CMMB system will apply the "satellite-terrestrial interactive multi-service infrastructure" technical mechanism that combines the satellite coverage and the terrestrial same-frequency supplement network. On the side of satellite, satellite in S-band spectrum is applied in uplink, and the downlink divides into the S-band broadcast signal to be received directly and the Ku-band distribution signal for terrestrial supplement distribution; as for the terrestrial supplement coverage, the way of the terrestrial radio broadcast is used to implement the terrestrial supplement signal coverage. Meanwhile, on the basis of implementation of the mobile multimedia service by broadcasting, the terrestrial bi-directional network is used to generally develop the bi-directional interactive service.

When users enjoy the mobile multimedia services, they acquire the related information (including the service name, display time and content summary) of the mobile multimedia broadcast service and quickly search, preview and access the service through the ESG or the electronic program guide (EPG) navigation. The ESG provides a good navigation mechanism for the users to watch TV and enjoy the information service so as to make the users conveniently and quickly find out the programs that they are interested in and view the additional information of the programs.

In the mobile multimedia broadcast system, the ESG consists of the basic description information, the data information and program prompt information; wherein, the basic description information is the control information of the ESG and describes the distribution and update of the data information in the ESG service, and it is transmitted in the control logic channel; the data information is the body of the ESG, describing the service information, the service extension information, schedule information, content information and service parameter information related to the mobile multimedia broadcast service, and it is transmitted as a special mobile multimedia broadcast service; the program prompt information is the auxiliary information of the ESG, describing the summary of the programs to be displayed in the service current time period and the next time period, and this auxiliary information is transmitted along with the mobile multimedia broadcast video and audio services.

In addition, the ESG also comprises the service provisioning information related to the purchase, interactive information and other relative information so as to make the terminal users conveniently subscribe or cancel the services and participate in the interactive processing.

Generally, the mobile multimedia service based on the broadcast network has advantages such as high spectrum utilization efficiency, large capacity, relatively low construction cost and wide customers, and it is widely used; its main drawback, however, is that it has relatively poor interaction property with the users due to the one-way feature of the services, thus it is difficult for it to provide personalized service. The method based on the mobile communication network, on the contrast, has relatively strong interaction property and it can provide more conveniences such as subscription, cancellation as well as interaction for the development of the mobile multimedia services.

Therefore, for the development of the mobile multimedia service, if the broadcast network can be integrated with the interactive network to deliver the service guide, it would provide the users with a service guide with relatively strong interaction and quick service information searching property, so as to provide more methods to develop the mobile multimedia service.

### Summary of the Invention

The technical problem to be solved by the present invention is to provide a method for receiving and delivering the ESG and a device for receiving the ESG, providing the users with a service guide with relatively strong interaction property, so as to provide the users with better service experiences.

In order to solve the above technical problem, the present invention provides a method for receiving and delivering an electronic service guide, comprising:
a multimedia broadcast system dividing the electronic service guide (ESG) into basic ESG information and enhanced ESG information and delivering said basic ESG information via a broadcast network and said enhanced ESG information via an interactive network; wherein, the basic ESG information comprises at least basic description information, data information and program prompt information; the enhanced ESG information comprises at least service provisioning information and/or interactive information; and
after accessing an mobile multimedia service application, a mobile terminal receiving the basic ESG information via the broadcast network and said enhanced ESG information via the interactive network, and combining the basic ESG information and the enhanced ESG information into complete ESG information to be displayed to users.

Furthermore, content of said basic ESG information matches with that of the enhanced ESG information, and said ESG information and said enhanced ESG information uses a same ESG identifier and/or a same version number.

Furthermore, said service provisioning information in the enhanced ESG information comprises at least one or more of purchase item information, purchase data information and purchase channel information.

Furthermore, the processing of the terminal receiving said basic ESG information comprises: first receiving the basic ESG information and analyzing the basic ESG information to acquire the basic description information; when the basic ESG information is stored locally and the ESG identifier and/or the version number in the basic description information acquired by analysis and the ESG identifier and/or the version number in the stored basic ESG information are different, the terminal continuing to receive and analyzing the rest basic ESG information, and updating the stored basic ESG information if determining that the stored basic ESG information needs to be updated; otherwise, keeping the original stored basic ESG information unchanged.

Furthermore, the terminal pre-displays the basic ESG information to the users after receiving the basic ESG information.

Furthermore, the processing of the terminal receiving said enhanced ESG information comprises: if there is indication information for acquiring the enhanced ESG information in the basic ESG information, analyzing the basic ESG information to acquire an access address of the enhanced ESG information, the ESG identifier and/or the version number; when the enhanced ESG information is already stored locally and the ESG identifier and/or the version number in the stored enhanced ESG information are different from the analyzed ESG identifier and/or version number, and the terminal acquiring the enhanced ESG information from an interactive network server, analyzing and storing the information if determining that the stored enhanced ESG information needs to be updated; otherwise, keeping the stored enhanced ESG information unchanged.

To solve the above technical problem, the present invention provides a method for receiving an electronic service guide, comprising: a mobile terminal receiving basic electronic service guide (ESG) information via broadcast network and an enhanced ESG information via an interactive network, the basic ESG information comprising at least basic description information, data information and program prompt information; the enhanced ESG information comprising at least service provisioning information and/or interactive information; and then combining the basic ESG information and the enhanced ESG information into complete ESG information to be displayed to users.

Furthermore, content of the basic ESG information matches with that of the enhanced ESG information, and the basic ESG information and the enhanced ESG information uses a same ESG identifier and/or a same version number.

Furthermore, said service provisioning information in the enhanced ESG information comprises at least one or more of purchase item information, purchase data information and purchase channel information.

Furthermore, the processing of the terminal receiving said basic ESG information comprises: first receiving the basic ESG information and analyzing the basic ESG information to acquire basic description information; when the basic ESG information is stored locally and the ESG identifier and/or the version number in the basic description information acquired by analysis are different from those in the stored basic ESG information, the terminal continuing to receive and analyze the rest basic ESG information and updating the stored basic ESG information if determining that the stored basic ESG information needs to be updated; otherwise, keeping the stored basic ESG information unchanged;
the processing of the terminal receiving said enhanced ESG information comprises: if there is indication information for acquiring the enhanced ESG information in the basic ESG information, the terminal analyzing the basic ESG information to acquire an access address of the enhanced ESG information, the ESG identifier and/or the version number; when the enhanced ESG information is stored locally and the ESG identifier and/or the version number in the stored enhanced ESG information are different from the ESG identifier and/or the version number acquired by analysis, the terminal acquiring the enhanced ESG information from an interactive network server according to the access address of the enhanced ESG information, analyzing and storing said enhanced ESG information if determining that the stored enhanced ESG information needs to be updated; otherwise, keeping the stored enhanced ESG information unchanged.

To solve the above technical problem, the present invention provides a device for receiving an electronic service guide, used in a mobile terminal; said device comprising an electronic service guide (ESG) data acquisition module and a data combination module which are connected to each other; wherein:
the ESG data acquisition module is used to: receive basic ESG information via a broadcast network and enhanced ESG information via an interactive network, and output the basic ESG information and the enhanced ESG information to the data combination module; the basic ESG information comprising at least basic description information, data information and program prompt information; the enhanced ESG information comprising at least service provisioning information and/or interactive information;
the data combination module is used to combine the input basic ESG information and the enhanced ESG information into complete ESG data to be displayed to users.

Furthermore, said ESG data acquisition module comprises a basic ESG data acquisition module, a version update module and an enhanced ESG data acquisition module which are connected to one another; said device also comprises a storage module; wherein:
the basic ESG data acquisition module also connects with the enhanced ESG data acquisition module and the data combination module, and is used to receive the basic ESG information and analyze the basic ESG information to acquire the basic ESG information and output the acquired basic ESG information to the version update module, and output indication information of the enhanced ESG information, an access address URL of the enhanced ESG, an ESG identifier and/or a version number acquired by inquiry to the version update module; after receiving basic ESG update indication from the version update module, the basic ESG data acquisition module continues to receive and analyze the rest basic ESG information and output the information to the data combination module;
the version update module also connects with the storage module, and is used to, after inputting the basic description information, judge whether the stored basic ESG information needs to be updated or not when finding out the basic ESG information is stored in the storage module and the ESG identifier and/or the version number of the input basic description information are different from the ESG identifier and/or the version number of the stored basic ESG information, and then output the basic ESG update indication to the basic ESG data acquisition module; and further used to, after inputting the indication information of the enhanced ESG information, the access address URL of the enhanced ESG and the ESG identifier and/or the version number, determine that the stored enhanced ESG information needs to be updated when finding out that the storage module has stored the enhanced ESG information and the ESG identifier and/or the version number in the stored enhanced ESG information are different from the input ESG identifier and/or the version number, and then output to the enhanced ESG data acquisition module an enhanced ESG update indication carrying the access address URL of the enhanced ESG and the enhanced ESG identifier and/or the version number;
the enhanced ESG data acquisition module also connects with the data combination module, and is used to, after inputting the enhanced ESG update indication, acquire from an interactive network server the enhanced ESG information acquired by analysis according to the access address URL of the enhanced ESG, the ESG identifier and/or the version number carried in the update indication, and outputting the enhanced ESG information to the data combination module;
the storage module is used to store the basic ESG data and the enhanced ESG data.

Furthermore, the basic ESG data acquisition module is also used to pre-display the basic ESG information to the users via a display module in the terminal.

The present invention delivers the service guide by combining the broadcast network and the interactive network and provides the users with a service guide with relative strong interaction property; meanwhile, it makes the user terminals acquire the service information quickly, so as to provide the users with better service experience. The present invention provides a wider and broader path for the development of the mobile multimedia services.

### Brief Description of Drawings

FIG. 1 is a structural block of the ESG constructed by the present invention;
FIG. 2 is a flow chart of an embodiment of the method for receiving the ESG in accordance with the present invention;
FIG. 3 is a structural block of an embodiment of the receiving device for the ESG in accordance with the present invention.

### Preferred Embodiments of the Present Invention

The method for receiving and delivering the ESG in accordance with the present invention comprises: the system divides the ESG into the basic ESG information and the enhanced ESG information, and distributes them through the broadcast network and the interactive network respectively; wherein, the basic ESG information comprises the basic description information, the data information and program prompt information; the enhanced ESG information comprises the service provisioning information and the interactive information. After the mobile terminal receives the corresponding basic ESG via the broadcast network, it acquires the sliced data related to the interaction from the corresponding enhanced ESG via the interactive network according to the indication information in the basic ESG, and uniformly combines the data and displays the complete ESG information to the users. The present invention receives and delivers the service guide via the mode of a mixed network, so as to make the users acquire the service information quickly and provide the users with better service experience.

In the following, the above technical scheme of the present invention will be described in detail with combination of the accompanying figures and the preferred embodiments.

The method for receiving and delivering the ESG provided in the present invention comprises the following steps:
The ESG in the mobile multimedia service is divided into the basic ESG information and the enhanced ESG information, and the basic ESG information is distributed via the broadcast network while the enhanced ESG information via the interactive network; wherein, the basic ESG information comprises the basic description information, the data information and the program prompt information; the enhanced ESG information comprises the service provisioning information and the interactive information;

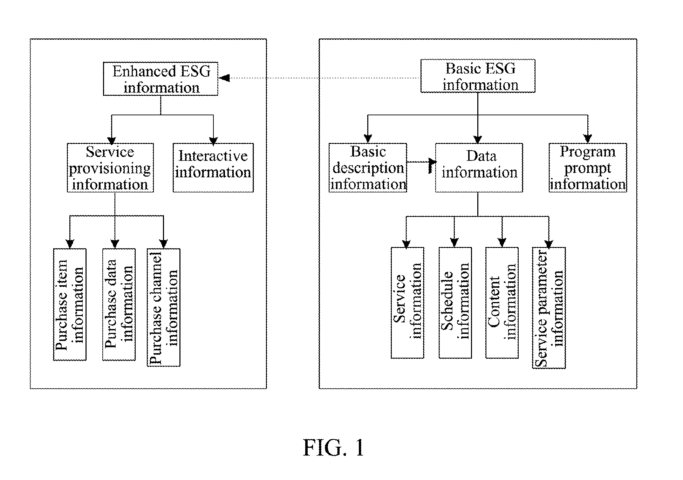

As shown in FIG. 1, the ESG delivered in the mobile multimedia service divides into two parts, the basic ESG information includes the content related to the media, such as the service information, the content information and the schedule information; while the other part is the enhanced ESG information including the service provisioning information and the interactive information.

The basic ESG information and enhanced ESG information shown in FIG. 1 do not limit to the items listed therein, and they can also include other information related to the services, such as the access information, the preview data, and so on.

The basic ESG and the enhanced ESG use the same ESG identifier and version number to synchronize the two ESG parts delivered via the broadcast network and the interactive network respectively, that is, the content in the enhanced ESG should match with that in the basic ESG.

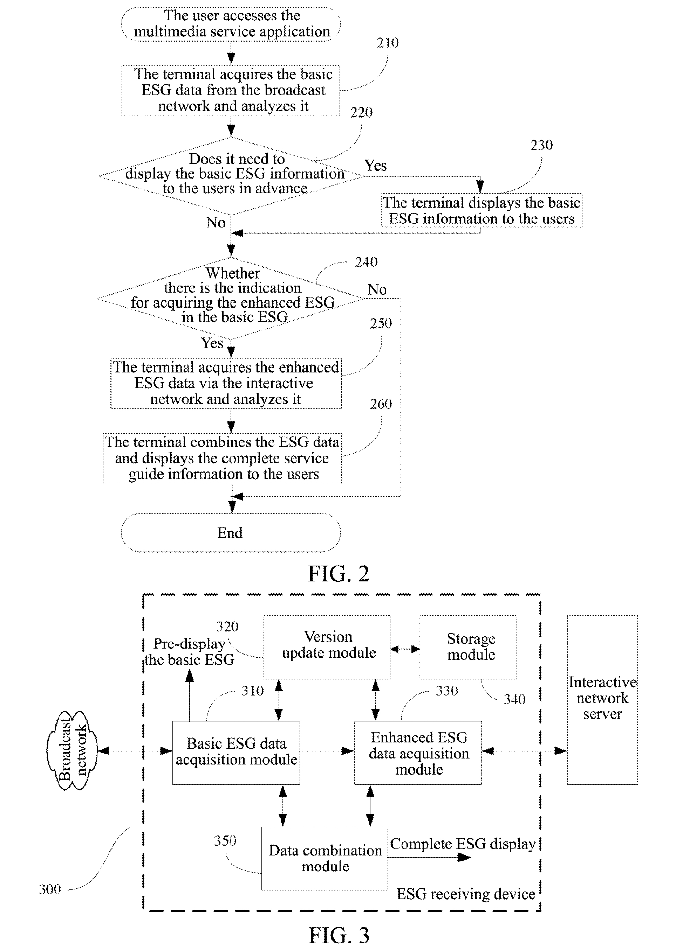

After the mobile terminal accesses the mobile multimedia service applications, it acquires the basic ESG via the broadcast network and the enhanced ESG via the mobile interactive network and combines them into a complete service guide to be displayed to the users. The specific steps are shown in FIG. 2:
210: the terminal acquires the basic ESG data via the broadcast network, analyzes them to acquire the basic ESG information;
   The terminal acquires the basic description information first; if the service guide data is stored in the local, compares the network number and the ESG update serial number in the stored basic ESG information with those in the basic description information, when the network number and/or the ESG update serial number in the basic description information are different from the ones in the stored basic ESG information, it determines that the stored basic ESG information needs to be updated, downloads in slice, analyzes and stores the basic ESG information; if it does not need to be updated, maintain the original service guide information unchanged.
220: the terminal judges whether it needs to pre-display the basic service guide information to the users or not according to the local policy, and proceed to step 230 if yes, otherwise, proceed to step 240;
   The local policy here means whether to display the basic service guide information to the users or to display complete service guide information after combining the data, the policy is determined according to the speed to acquire the enhanced ESG information from the interactive network and the update of the basic ESG data.
   In this multimedia service application, if the terminal needs to display the service guide information to the users instantly, while it takes a long time to acquire the whole service guide because it takes a relatively long time to acquire the enhanced service guide subsequently, then the basic ESG information, such as the channel, program list, and so on, can be displayed to the users first. The enhanced ESG information acquired via the interactive network can be processed in background. In this way, the terminal can quickly acquire and display the ESG information.
230: the terminal displays the basic ESG information to the users;
240: from the basic ESG information acquired by analysis, the terminal inquires whether there is an indication for acquiring the enhanced ESG information or not, and proceed to step 250 if yes, otherwise end the process;
   In the basic ESG data delivered via the broadcast network, the terminal acquires by inquiry the identifier of the enhanced ESG, the access address URL and/or version number of the enhanced ESG data, and the identifier can be represented with different specific forms, such as the network number, the ESG update serial number.
250: the terminal sends the enhanced ESG acquisition request to the interactive network server address URL, acquires the enhanced ESG data and analyzes them to acquire the enhanced ESG information;
   If there is enhanced ESG information stored locally, compare the ESG identifier or the version number therein to judge whether it needs to update the enhanced ESG data or not:
   If the data needs to be updated, send HTTP request to the server via the interactive network, and the request carries the ESG identifier and/or the version number; after the interactive network multimedia server receives the request, it sends the enhanced ESG information requested by the terminal to the terminal by comparing the ESG identifier or the version number; the terminal analyzes the enhanced ESG information sent by the interactive network server after receiving it.
   If the data does not need to be updated, maintain the original enhanced ESG information and end the process;
260: the terminal combines the basic ESG data and the enhanced ESG data, and displays the complete ESG data to the users; end the process.

Corresponding to the abovementioned method, the present invention also provides a device for receiving the ESG, and the device is used in the mobile terminal. As shown in FIG. 3, embodiment 300 of the device comprises: the basic ESG data acquisition module 310, the version update module 320 and the enhanced ESG data acquisition module 330, all of which are connected to one another, and also comprises the storage module 340 and the data combination module 350; wherein:
The basic ESG data acquisition module 310 connects with the enhanced ESG data acquisition module 330 and the data combination module 350 respectively, and is used to receive and analyze said basic ESG information, outputs the analyzed basic description information, the indication information of the enhanced ESG information acquired by inquiry, the access address URL of the enhanced ESG, the ESG identifier and/or the version number to said version update module 320; after receiving the basic ESG update indication from said version update module, it outputs the downloaded in slice and analyzed basic ESG information to the data combination module 350; pre-displays the basic ESG information to the users via the display module (not shown) in the terminal according to the local policy;
The version update module 320 also connects with the storage module 340, it is used to search out the stored basic ESG data from the storage module 340 after inputting the basic description information, compare the network number or the ESG update serial number information in the basic description information and that in the stored basic ESG data, and if they are different, it determines that the stored basic ESG data needs to be updated, outputs the basic ESG update indication to the basic ESG data acquisition module 310; after inputting the indication of the enhanced ESG information, the access address URL of the enhanced ESG, the ESG identifier and/or the version number, it searches out the stored enhanced ESG information from the storage module 340, and compares the input ESG identifier and/or said version number with the corresponding ones in the stored enhanced ESG data, and then determines that the stored enhanced ESG data needs to be updated if they are different, and outputs the enhanced ESG update indication with the access address URL of the enhanced ESG, the enhanced ESG identifier and/or the version number to the enhanced ESG data acquisition module 330;
The enhanced ESG data acquisition module 330 also connects with the data combination module 350, and it is used to acquire the enhanced ESG information from the interactive network server according to the access address URL of the enhanced ESG, the ESG identifier and/or the version number carried in the update indication after inputting the enhanced ESG update indication, and output the analyzed enhanced ESG information to the data combination module 350;
The storage module 340 is used to store the basic ESG data and the enhanced ESG data;
The data combination module 350 is used to combine the input basic ESG information and the enhanced ESG information, and display the complete ESG information to users through the display module (not shown) of the terminal.

The embodiment of the device for receiving the ESG in accordance with the present invention described above is just used to illustrate and explain the present invention rather than limit the present invention. Practically, the present invention also has many other embodiments. For example, the above basic ESG data acquisition module 310, the version update module 320 and the enhanced ESG data acquisition module 330 can be combined to an ESG data acquisition module which is used to acquire the corresponding basic data and enhanced data via the broadcast network and the interactive network respectively, and output the data to the data combination module.

Of course, the present invention also has a lot of other embodiments, various corresponding modifications and variations may be made according to the present invention by those skilled in the field without departing from the spirit and essence of the present invention. All these modification and variations, however, should belong to the scope of the appended claims of the present invention.

### Industrial Applicability

The present invention provides wider commercial path for the development and application of the mobile multimedia services.

## Claims

1. A method for receiving and delivering an electronic service guide, comprising:
a multimedia broadcast system dividing the electronic service guide (ESG) into basic ESG information and enhanced ESG information and delivering said basic ESG information via a broadcast network and said enhanced ESG information via an interactive network; wherein, the basic ESG information comprises at least basic description information, data information and program prompt information; the enhanced ESG information comprises at least service provisioning information and/or interactive information; and
after accessing an mobile multimedia service application, a mobile terminal receiving the basic ESG information via the broadcast network and said enhanced ESG information via the interactive network, and combining the basic ESG information and the enhanced ESG information into complete ESG information to be displayed to users.

2. According to the method of claim 1, wherein, content of said basic ESG information matches with that of the enhanced ESG information, and said basic ESG information and said enhanced ESG information uses a same ESG identifier and/or a same version number.

3. A method of claim 1, wherein, said service provisioning information in the enhanced ESG information comprises at least one or more of purchase item information, purchase data information and purchase channel information.

4. A method of claim 2 or 3, wherein, the processing of the terminal receiving said basic ESG information comprises: first receiving the basic ESG information and analyzing the basic ESG information to acquire the basic description information; when the basic ESG information is stored locally and the ESG identifier and/or the version number in the basic description information acquired by analysis and the ESG identifier and/or the version number in the stored basic ESG information are different, the terminal continuing to receive and analyzing the rest basic ESG information, and updating the stored basic ESG information if determining that the stored basic ESG information needs to be updated; otherwise, keeping the original stored basic ESG information unchanged.

5. A method of claim 4, further comprising: the terminal pre-displaying the basic ESG information to the users after receiving the basic ESG information.

6. A method of claim 2 or 3, wherein, the processing of the terminal receiving said enhanced ESG information comprises: if there is indication information for acquiring the enhanced ESG information in the basic ESG information, analyzing the basic ESG information to acquire an access address of the enhanced ESG information, the ESG identifier and/or the version number; when the enhanced ESG information is already stored locally and the ESG identifier and/or the version number in the stored enhanced ESG information are different from the analyzed ESG identifier and/or version number, and the terminal acquiring the enhanced ESG information from an interactive network server, analyzing and storing the information if determining that the stored enhanced ESG information needs to be updated; otherwise, keeping the stored enhanced ESG information unchanged.

7. A method for receiving an electronic service guide, comprising: a mobile terminal receiving basic electronic service guide (ESG) information via broadcast network and an enhanced ESG information via an interactive network, the basic ESG information comprising at least basic description information, data information and program prompt information; the enhanced ESG information comprising at least service provisioning information and/or interactive information; and then combining the basic ESG information and the enhanced ESG information into complete ESG information to be displayed to users.

8. A method of claim 8, wherein, content of the basic ESG information matches with that of the enhanced ESG information, and the basic ESG information and the enhanced ESG information uses a same ESG identifier and/or a same version number.

9. A method of claim 8, wherein, said service provisioning information in the enhanced ESG information comprises at least one or more of purchase item information, purchase data information and purchase channel information.

10. A method of claim 9 or 10, wherein:
the processing of the terminal receiving said basic ESG information comprises: first receiving the basic ESG information and analyzing the basic ESG information to acquire basic description information; when the basic ESG information is stored locally and the ESG identifier and/or the version number in the basic description information acquired by analysis are different from those in the stored basic ESG information, the terminal continuing to receive and analyze the rest basic ESG information and updating the stored basic ESG information if determining that the stored basic ESG information needs to be updated; otherwise, keeping the stored basic ESG information unchanged;
the processing of the terminal receiving said enhanced ESG information comprises: if there is indication information for acquiring the enhanced ESG information in the basic ESG information, the terminal analyzing the basic ESG information to acquire an access address of the enhanced ESG information, the ESG identifier and/or the version number; when the enhanced ESG information is stored locally and the ESG identifier and/or the version number in the stored enhanced ESG information are different from the ESG identifier and/or the version number acquired by analysis, the terminal acquiring the enhanced ESG information from an interactive network server according to the access address of the enhanced ESG information, analyzing and storing said enhanced ESG information if determining that the stored enhanced ESG information needs to be updated; otherwise, keeping the stored enhanced ESG information unchanged.

11. A device for receiving an electronic service guide, used in a mobile terminal; said device comprising an electronic service guide (ESG) data acquisition module and a data combination module which are connected to each other; wherein:
the ESG data acquisition module is used to: receive basic ESG information via a broadcast network and enhanced ESG information via an interactive network, and output the basic ESG information and the enhanced ESG information to the data combination module; the basic ESG information comprising at least basic description information, data information and program prompt information; the enhanced ESG information comprising at least service provisioning information and/or interactive information;
the data combination module is used to combine the input basic ESG information and the enhanced ESG information into complete ESG data to be displayed to users.

12. A device of claim 11, wherein, said ESG data acquisition module comprises a basic ESG data acquisition module, a version update module and an enhanced ESG data acquisition module which are connected to one another; said device also comprises a storage module; wherein:
the basic ESG data acquisition module also connects with the enhanced ESG data acquisition module and the data combination module, and is used to receive the basic ESG information and analyze the basic ESG information to acquire the basic ESG information and output the acquired basic ESG information to the version update module, and output indication information of the enhanced ESG information, an access address URL of the enhanced ESG, an ESG identifier and/or a version number acquired by inquiry to the version update module; after receiving basic ESG update indication from the version update module, the basic ESG data acquisition module continues to receive and analyze the rest basic ESG information and output the information to the data combination module;
the version update module also connects with the storage module, and is used to, after inputting the basic description information, judge whether the stored basic ESG information needs to be updated or not when finding out the basic ESG information is stored in the storage module and the ESG identifier and/or the version number of the input basic description information are different from the ESG identifier and/or the version number of the stored basic ESG information, and then output the basic ESG update indication to the basic ESG data acquisition module; and further used to, after inputting the indication information of the enhanced ESG information, the access address URL of the enhanced ESG and the ESG identifier and/or the version number, determine that the stored enhanced ESG information needs to be updated when finding out that the storage module has stored the enhanced ESG information and the ESG identifier and/or the version number in the stored enhanced ESG information are different from the input ESG identifier and/or the version number, and then output to the enhanced ESG data acquisition module an enhanced ESG update indication carrying the access address URL of the enhanced ESG and the enhanced ESG identifier and/or the version number;
the enhanced ESG data acquisition module also connects with the data combination module, and is used to, after inputting the enhanced ESG update indication, acquire from an interactive network server the enhanced ESG information acquired by analysis according to the access address URL of the enhanced ESG, the ESG identifier and/or the version number carried in the update indication, and outputting the enhanced ESG information to the data combination module;
the storage module is used to store the basic ESG data and the enhanced ESG data.

13. A device of claim 12, wherein, the basic ESG data acquisition module is also used to pre-display the basic ESG information to the users via a display module in the terminal.
